# EUROPÄISCHE PATENTSCHRIFT

(11) **EP 0 618 012 B1**
(45) Veröffentlichungstag und Bekanntmachung des Hinweises auf die Patenterteilung: **18.09.1996**
(21) Anmeldenummer: 94103747.5
(22) Anmeldetag: 11.03.1994
(51) Int. Cl.: B03D 1/14, B04C 3/00

(54) **Flotationseinrichtung**
Flotation device
Dispositif de flottation

(30) Priorität: 02.04.1993 DE 4310807
(43) Veröffentlichungstag der Anmeldung: 05.10.1994
(73) Patentinhaber: J.M. Voith GmbH, D-89522 Heidenheim (DE)
(72) Erfinder: Trefz, Michael, Dr., D-89522 Heidenheim (DE)
(74) Vertreter: Weitzel, Wolfgang, Dr.-Ing. Patentanwalt

(56) Entgegenhaltungen:
- DE-A- 3 306 600
- DE-B- 2 738 782
- US-A- 4 378 289
- US-A- 5 080 792

## Beschreibung

Die Erfindung betrifft eine Flotationseinrichtung entsprechend dem Oberbegriff des Patentanspruchs 1. Eine solche Einrichtung ist bekannt aus DE-C 33 06 600. Bei dieser Einrichtung wird mittels eines Stufeninjektors ein Suspensions-Luft-Gemisch hergestellt, das tangential durch die Einströmung in den Flotationsbehälter eingeleitet wird. Dabei erfolgt die Zuführung im oberen Teil des Flotationsbehälters, in welchen auch das Tauchrohr zur Abführung der Luft bzw. der starren angelagerten Schmutzpartikel reicht. Die Schwierigkeit bei dieser Anordnung ist es, auch feine Luftblasen dazu zu bewegen, dem Wirbelkern zuzuströmen. Dadurch wurde sich ingesamt die Flotationsleistung bzw. der Reinigungsgrad erhöhen.

Die Aufgabe der Erfindung ist es, einen Flotationsbehälter dieser Art mit verbessertem Wirkungsgrad anzugeben.

Diese Aufgabe wird erfindungsgemäß durch die Merkmale des kennzeichnenden Teils des Patentanspruchs 1 gelöst.

Nachfolgend wird die Erfindung anhand der Figuren der Zeichnung erläutert; dabei stellen im einzelnen dar:
- Figur 1: einen Axialschnitt durch eine erste Ausführungsform;
- Figur 2: einen Axialschnitt durch eine andere Ausführungsform;
- Figur 3: einen Querschnitt zu Figur 2 und
- Figur 3a-f: weitere Formen prinzipmäßig im Axialschnitt.

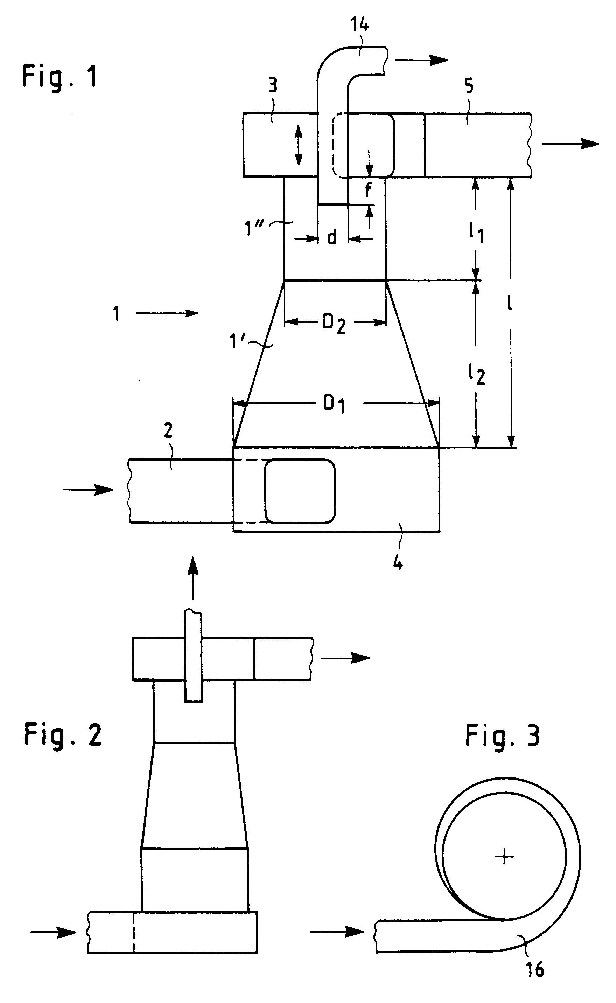

In Figur 1 ist der mittlere Trennteil 1 des Flotationsbehälters, in welchem die Trennung von Luft und Suspension erfolgt, zusammengesetzt aus einem konischen Teil 1' in Form eines Kegelstumpfes und einem zylindrischen Teil 1'', der auf den konischen Teil aufgesetzt ist. Die tangentiale Zuströmung ist mit 2 und der daran angeschlossene Einströmteil, der ebenfalls zylindrisch ausgebildet ist, mit 4 bezeichnet. Der Ausströmteil ist ebenfalls zylindrisch und hat eine tangentiale Ausströmung 5. In den zylindrischen Teil 1'' des Trennteils 1 ragt von oben ein Tauchrohr 14 zentral hinein, und zwar um eine Strecke f, die zwischen dem 0,8- bis 1,2-fachen des Außendurchmessers d des Tauchrohrs 14 beträgt. Für das Verhältnis der Längen (Höhen) des konischen Teils 1' und des zylindrischen Teils 1'' des Trennteils 1 l₁/l₂ kann der Bereich zwischen 0,2 und 1 gewählt werden. Die Gesamtlänge l des Trennteils 1 kann zwischen dem 2,5- und 3,5-fachen des Durchmessers D₂ des zylindrischen Teils 1'' betragen. Das Verhältnis zwischen dem maximalen Durchmesser D₁ und dem minimalen Durchmesser D₂ des Trennteils 1 kann zwischen 1,2 und 3 vorzugsweise betragen. Die Gesamtlänge des Trennteils l wird praktisch zwischen 0,8 und 2,0 m liegen. Die letzteren Angaben haben für andere Bauformen dieser Flotationseinrichtungen, die in anderen Figuren dargestellt sind, auch Gültigkeit.

Die Wirkungsweise des erfindungsgemäßen Zyklons ist insofern günstig, als im oberen Teil 1'' des Trennteils 1 mit dem kleinen Durchmesser sich eine sehr hohe Zentrifugalbeschleunigung einstellt, so daß auch kleine Blasen aufsteigen und mit den daran anhaftenden Schmutzpartikeln abgeschieden werden. Die Geschwindigkeit ist jedoch so einzustellen, daß die an den Blasen anhaftenden Druckfarbenpartikel nicht durch zu hohe Scherkräfte abgelöst werden.

Unterstützt durch die axiale Strömungskomponente der Suspension von unten nach oben wird der Schaum durch den Behälter in Richtung Entgasungsöffnung, d.h. Tauchrohr, transportiert. Infolge des inneren Überdruckes stellt sich ein kontinuierlicher Schaumaustrag ein. Vorzugsweise ist die beschriebene Anordnung anzuwenden, weil nach Durchtritt durch den engen Teil 1'' des Trennteils 1 wieder eine Durchmesservergrößerung erfolgt und die Suspension verzögert wird. Ähnliche Auslaßteile sind auch bei den anderen Varianten, insbesondere der Figuren 3a-d vorteilhaft anzuwenden. Vorteilhaft kann auch das Tauchrohr 14 innerhalb des Trennteils oder auch Ausströmteils verschiedene Bohrungen erhalten, um eine Nachentgasung unter Ausnutzung der Sekundärströmung zu erreichen. Die Zulaufgeschwindigkeit des Suspensions-Luft-Gemisches sollte zwischen 0,5 und 5 m/s und die Axialgeschwindigkeit durch den Zyklon zwischen 0,1 und 1 m/s betragen.

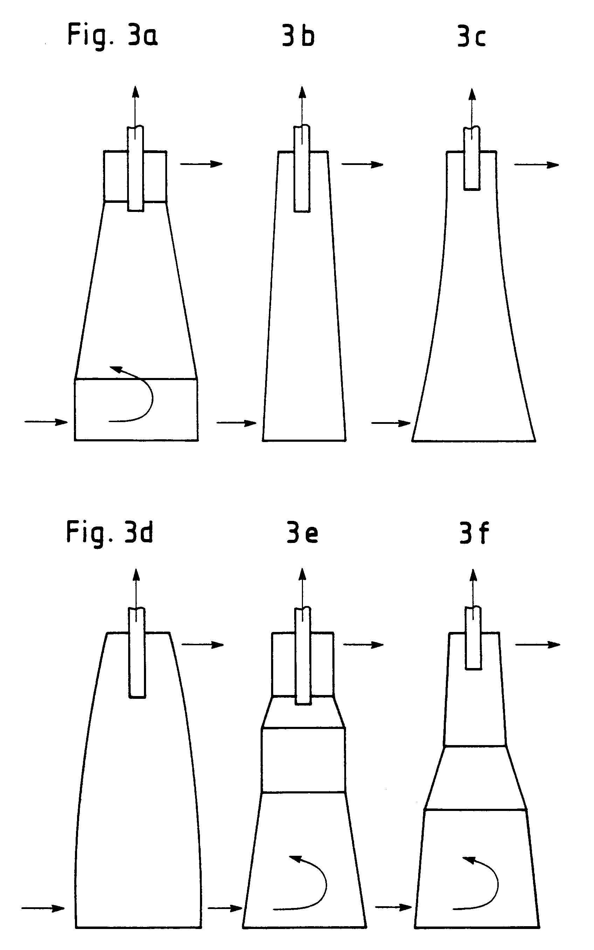

Der Flotationsbehälter der Figuren 2 und 3 hat eine andere Einströmung 16, nämlich in Form einer Einlaufspirale.

Die Figuren 3a-3f zeigen weitere Formen des Abscheideteils, und zwar mit sehr kleinem zylindrischen, oberen Teil, als durchgehend kegelstumpfförmig ausgebildet, mit einer konkaven oder einer konvexen Form und schließlich als eine Kombination aus zylindrischen und konischen Abschnitten.

## Patentansprüche

1. Flotationseinrichtung, insbesondere zur Reinigung von Fasersuspension in der Papierindustrie, mit einem im wesentlichen rotationssymmetrischen, vertikalen Trennteil (1) für Luftblasen mit daran angelagerten Schmutzpartikeln einerseits und Fasern andererseits, welcher einen, insbesondere tangentialen, Zulauf (2) für das Suspension-Luft-Gemisch und einen Ablauf (5) für gereinigte Suspension sowie ein zentrales Tauchrohr (14) zur Abführung von Schmutzpartikeln und Luft aufweist, dadurch gekennzeichnet, daß der Zulauf (2) unten, der Ablauf (5) oben angeordnet ist und der Trennteil (1) sich nach oben hin wesentlich verjüngt, wobei das Durchmesserverhältnis von größtem Durchmesser (D₁) zu kleinstem Durchmesser (D₂) (D₁/D₂) zwischen 1,2 und 3 beträgt.

2. Flotationseinrichtung nach Anspruch 1, dadurch gekennzeichnet, daß das Verhältnis des Durchmessers (d) des Tauchrohrs (14) zum kleinsten Durchmesser (D₂) des Trennteils (1) (d/D₂) zwischen 0,3 und 0,5 beträgt.

3. Flotationseinrichtung nach Anspruch 1 oder 2, dadurch gekennzeichnet, daß die Eintauchtiefe (f) des Tauchrohrs (14) in den Trennteil das 0,8- bis 1,2-fache des Durchmessers (d) des Tauchrohrs (14) beträgt, wobei (d) der Außendurchmesser des Tauchrohrs (14) ist.

4. Flotationseinrichtung nach einem der Ansprüche 1-3, dadurch gekennzeichnet, daß ein Einströmteil (4) vorgesehen ist, welcher zylindrisch ausgebildet ist und einen Durchmesser aufweist, der mindestens gleich dem maximalen Durchmesser (D₁) des Trennteils (1) ist.

5. Flotationseinrichtung nach einem der Ansprüche 1-4, dadurch gekennzeichnet, daß ein Abströmteil (3) vorgesehen ist, dessen Durchmesser mindestens 10 % größer ist als der minimale Durchmesser (D₂) des Trennteils (1).

6. Flotationseinrichtung nach einem der Ansprüche 1-5, dadurch gekennzeichnet, daß die Eintrittsgeschwindigkeit der Suspension zwischen 0,5 und 5 m/s und die axiale Geschwindigkeitskomponente in der Flotationseinrichtung zwischen 0,1 und 1 m/s beträgt.

## Claims

1. Floatation device, in particular for cleaning fibrous suspensions in the paper industry, with a rotationally symmetrical vertical separating element (1) for air bubbles with dirt particles attached thereto on the one hand and fibres on the other hand, which has in particular a tangential inlet (2) for the suspension air mixture and an outlet (5) for the cleaned suspension and a central immersion pipe (14) for removing dirt particles and air, characterised in that the inlet (2) is at the bottom and the outlet (5) at the top and the separating element (1) tapers towards the top, whereby the diameter ratio of the largest diameter (D₁) to the smallest diameter (D₂) (D₁/D₂) is between 1.2 and 3.

2. Floatation device according to claim 1, characterised in that the diameter ratio (d) of the immersion pipe (14) to the smallest diameter (D₂) of the separating element (1) (d/D₂) is between 0.3 and 0.5.

3. Floatation device according to claim 1 or 2, characterised in that the immersion depth (f) of the immersion pipe (14) in the separating element is 0,8 to 1,2 times the diameter (d) of the immersion pipe (14), whereby (d) is the outer diameter of the immersion pipe (14).

4. Floatation device according to one of claims 1-3, characterised in that an inflow element (4) is provided which is cylindrical and has a diameter which is at least equal to the maximum diameter (D₁) of the separating element (1).

5. Floatation device according to one of claims 1-4, characterised in that an outflow element (3) is provided the diameter of which is at least 10 % greater than the minimum diameter (D₂) of the separating element (1).

6. Floatation device according to one of claims 1-5, characterised in that the inlet velocity of the suspension is between 0.5 and 5 m/s and the axial velocity component in the floatation device is between 0.1 and 1 m/s.

## Revendications

1. Dispositif de flottation, notamment pour l'épuration d'une suspension de fibres dans l'industrie papetière, comprenant une partie de séparation (1), verticale et essentiellement à symétrie de révolution, pour des bulles d'air auxquelles sont fixées d'une part des particules d'impuretés et d'autre part des fibres, cette partie de séparation comprenant une admission (2), notamment tangentielle, pour le mélange suspension-air, et une évacuation (5) pour la suspension épurée, ainsi qu'un tube plongeant (14) central servant à l'évacuation des particules d'impuretés et de l'air, caractérisé en ce que l'admission (2) est disposée en bas et l'évacuation (5) en haut et la partie de séparation (1) rétrécit essentiellement vers le haut, le rapport (D₁/D₂) du plus grand diamètre (D₁) au plus petit diamètre (D₂) étant compris entre 1,2 et 3.

2. Dispositif de flottation selon la revendication 1, caractérisé en ce que le rapport (d/D₂) du diamètre (d) du tube plongeant (14) au plus petit diamètre (D₂) de la partie de séparation (1) est compris entre 0,3 et 0,5.

3. Dispositif de flottation suivant la revendication 1 ou 2, caractérisé en ce que la distance (f) à laquelle le tube plongeant (14) s'enfonce dans la partie de séparation est égale à 0,8 à 1,2 fois le diamètre (d) du tube plongeant (14), (d) étant le diamètre extérieur du tube plongeant (14).

4. Dispositif de flottation selon l'une des revendication 1-3, caractérisé en ce qu'il est prévu une partie d'introduction (4) qui est cylindrique et qui a un diamètre qui est au moins égal au diamètre maximal (D₁) de la partie de séparation (1).

5. Dispositif de flottation selon l'une des revendication 1-4, caractérisé en ce qu'il est prévu une partie d'extraction (3) dont le diamètre est supérieur d'au moins 10% au diamètre minimal (D₂) de la partie de séparation (1).

6. Dispositif de flottation selon l'une des revendications 1-5, caractérisé en ce que la vitesse d'entrée de la suspension est comprise entre 0,5 et 5 m/s et la composante axiale de vitesse dans le dispositif de flottation est comprise entre 0,1 et 1 m/s.
